# EUROPÄISCHE PATENTSCHRIFT

(11) **EP 2 371 473 B1**
(45) Veröffentlichungstag und Bekanntmachung des Hinweises auf die Patenterteilung: **07.11.2012**
(21) Anmeldenummer: 11160467.4
(22) Anmeldetag: 30.03.2011
(51) Int. Cl.: B23B 5/16

(54) **Vorrichtung zur teilweisen Entschichtung von Rohren, insbesondere von Rohren aus Metall**
Device for removing part of the surface of tubes, in particular metal tubes
Dispositif de décapage partiel de tuyaux, notamment de tuyaux en métal

(30) Priorität: 01.04.2010 DE 102010013870
(43) Veröffentlichungstag der Anmeldung: 05.10.2011
(73) Patentinhaber: VIEGA GmbH & Co. KG, 57439 Attendorn (DE)
(72) Erfinder: Franke, Bernd, 57413, Finnentrop-Schönholthausen (DE); Koschig, Bernd, 57439, Attendorn (DE)
(74) Vertreter: Cohausz & Florack

(56) Entgegenhaltungen:
- EP-A1- 1 797 982
- EP-A2- 1 112 794
- DE-A1- 3 032 232
- DE-A1- 10 225 086
- DE-C- 362 836
- DE-U1- 29 809 658
- JP-U- 61 046 197
- US-A- 1 448 877
- US-A- 3 820 420
- US-A1- 2002 129 684

## Beschreibung

Die Erfindung betrifft eine Vorrichtung gemäß dem Oberbegriff des Anspruchs 1 zur teilweisen Entschichtung von Rohren, insbesondere von Rohren aus Metall, mit einem Grundkörper, insbesondere einem zwingenförmigen Grundkörper, mit einer am Grundkörper ausgebildeten Aufnahme für ein Rohr, mit mindestens zwei an einer ersten Seite der Aufnahme angeordneten Stützmitteln zur Stützung des Rohres und mit einem auf der gegenüberliegenden Seite der Aufnahme angeordneten Schaberkopf. Die Erfindung betrifft ebenfalls die Verwendung einer solchen Vorrichtung.

Rohre aus Metall, insbesondere dickwandige Stahlrohre sind häufig mit einer Beschichtung, beispielsweise mit einer Korrosionsschutzschicht versehen, welche nach der Herstellung auf die Rohre aufgebracht wird. Bei dieser Schutzschicht kann es sich insbesondere um eine Schellack- oder eine andere Kunststoffbeschichtung handeln. Bei der Verbindung eines solchen Rohres mit einem weiteren Rohr bzw. mit einem Rohrverbinder haben sich solche Beschichtungen im Bereich des Rohrendes jedoch als nachteilig herausgestellt, da sich diese bei verschiedenen Rohrherstellern in ihrer Zusammensetzung und Dicke sehr stark unterscheiden können und insbesondere häufig ungleichmäßig auf das Rohr aufgetragen sind. Insbesondere weisen viele dieser Schutzbeschichtungen Tropfnasen oder Unebenheiten auf, welche zu einer ungleichmäßigen Oberfläche des Rohres führen. Bei einer solchen Oberflächenbeschaffenheit im Bereich eines Rohrendes ist die Abdichtung des Rohres an einer Verbindungsstelle durch einen O-Ring nur sehr schlecht bis gar nicht durchführbar. Daher muss die Schutzschicht zumindest im Bereich des Rohrendes vor der Installation einer Rohrverbindung teilweise entfernt werden. Im Stand der Technik wird dazu die Oberfläche des Rohres mit einem Schleifpapier gereinigt oder mit einer Drahtbürste gebürstet. Die körnige Oberfläche des Schleifpapiers setzt sich durch den Abrieb der Schutzschicht jedoch schnell zu, so dass die Entfernung der Oberflächenschicht auf diese Weise wenig effektiv ist. Das Bürsten erfordert wiederum einen sehr großen Zeitaufwand, so dass eine solche Vorbereitung des Rohrendes für eine Rohrverbindung sehr umständlich ist.

Aus dem Stand der Technik der EP 1 112 794 A2 ist ein Schälwerkzeug zum Schälen eines kunststoffbeschichteten Rohres bekannt, welches zwei Stützmittel zur Stützung eines Rohres und auf der gegenüberliegenden Seite ein Messer aufweist, so dass bei Drehung des Schälwerkzeugs um ein beschichtetes Rohr eine Schicht von der Rohroberfläche abgeschält werden kann.

Der vorliegenden Erfindung liegt die Aufgabe zu Grunde, eine gattungsgemäße Vorrichtung zur teilweisen Entschichtung von Rohren, insbesondere von Rohren aus Metall, zur Verfügung zu stellen, bei der die Handhabung der Vorrichtung und die Entschichtung der Rohre verbessert ist.

Diese Aufgabe wird bei einer Vorrichtung mit den Merkmalen des Anspruchs 1gelöst.

Es ist erkannt worden, dass das in der Vorrichtung angeordnete Rohr durch die zwei prismenförmigen Schaberkanten besser fixiert werden kann, so dass das Rohr bei einer Drehung des Rohres bzw. der Vorrichtung sicher in der Aufnahme des Grundkörpers geführt wird. Durch die Prismenform wird eine große Stabilität der Schaberkanten erreicht, so dass das Rohr auch bei starken Unebenheiten der Rohrbeschichtung sicher und gleichmäßig in der Aufnahme geführt wird. Die zwei Schaberkanten weisen in Richtung der Aufnahme des Grundkörpers und liegen bevorzugt parallel zueinander. Auf diese Weise kann durch Drehung des Rohres bzw. der Vorrichtung in beide Richtungen eine sichere und zuverlässige Entschichtung der Rohre erreicht werden. Insbesondere dient die prismenförmige Schaberkante, welche mit der Rohroberfläche zuerst in Kontakt kommt, zum Entschichten der Rohroberfläche und die zweite prismenförmige Schaberkante zum nachträglichen Schleifen bzw. Glätten der entschichteten Rohroberfläche.

Dadurch, dass eine Entschichtung eines Rohres in beiden Drehrichtungen möglich ist, wird insbesondere erreicht, dass ein Rohr auch durch eine oszillierende Bewegung, d.h. durch eine Hin- und Herbewegung, effektiv entschichtet werden kann. Dies ist insbesondere bei beengten Platzverhältnissen bzw. bei nicht frei drehbaren Rohren, beispielsweise bereits installierten Rohren, von Vorteil.

Unter einer prismenförmigen Schaberkante wird verstanden, dass der Schaberkopf im Bereich der Schaberkante im Querschnitt im Wesentlichen eine Dreiecksform aufweist, wobei der in Richtung der Aufnahme weisende Winkel der Dreiecksform, d.h. der Winkel an der Schaberkante, insbesondere zwischen 60° und 120° vorzugsweise mehr als 80° und/oder weniger als 110° beträgt. Die an diesen Winkel angrenzenden Seitenkanten des Dreiecks weisen bevorzugt eine Länge von mindestens 0,5 cm, insbesondere von mindestens 1 cm auf. Auf diese Weise wird eine hohe Verschleißfestigkeit und Stabilität der Schaberkanten und des Schaberkopfs erreicht. Die Schaberkanten weisen bevorzugt eine Länge von 30 bis 50 mm auf. Durch diese Länge wird ein bevorzugter Kompromiss zwischen einem geringen Kraftaufwand für die Betätigung der Vorrichtung und einer ausreichender Breite der Schaberkante für eine effektive Entschichtung erreicht. Der Schaberkopf besteht bevorzugt aus Werkzeugstahl, insbesondere einem Kohlenstoffstahl, da dieser eine ausreichende Härte für die Entschichtung und eine ausreichende Verschleißfestigkeit aufweist.

Unter einem zwingenförmigen Grundkörper wird ein Grundkörper mit einer als Aufnahme dienenden Ausnehmung verstanden, welche von dem Grundkörper in einer Schnittebene im Wesentlichen von drei Seiten beschränkt wird. Die die Ausnehmung begrenzenden Seiten des Grundkörpers können im Wesentlichen rechtwinklig und/oder schräg zueinander angeordnet sein. Die die Ausnehmung begrenzenden Seiten des Grundkörpers können auch zumindest teilweise gerundet ausgebildet sein und optional ineinander übergehen. Insbesondere kann die Ausnehmung zum Teil oder im Wesentlichen kreisförmig ausgebildet sein. Eine solche Ausnehmung kann durch Bohren oder Fräsen besonders einfach hergestellt werden.

Erfindungsgemäßsind die zwei Schaberkanten so angeordnet, dass diese mit den zwei Stützmitteln auf einem gemeinsamen Innenkreis liegen. Auf diese Weise wird erreicht, dass die Positionen der Schaberkanten und der Stützmittel optimal an den üblicherweise kreisförmigen Querschnitt der zu entschichtenden Rohre angepasst sind. Bevorzugt üben die beiden Schaberkanten im Wesentlichen dieselbe Kraft auf die Rohroberfläche eines in die Vorrichtung eingesetzten Rohres aus. Auf diese Weise ist die von den Schaberkanten ausgeübte Entschichtungswirkung in beiden Drehrichtungen im Wesentlichen gleich stark. Unter dem gemeinsamen Innenkreis wird der größte Kreis verstanden, der die Schaberkanten und die Stützmittel berührt.

Die Gleichmäßigkeit der Entschichtung in beiden Drehrichtungen wird in einer weiteren bevorzugten Ausführungsform der erfindungsgemäßen Vorrichtung dadurch verbessert, dass die Schaberkanten und die mindestens zwei Stützmittel im Wesentlichen spiegelsymmetrisch zueinander angeordnet sind. Durch eine spiegelsymmetrische Anordnung kann weiterhin eine stabilere Fixierung des Rohres in der Aufnahme erreicht werden. Unter einer im Wesentlichen spiegelsymmetrischen Anordnung der Schaberkanten und der Stützmittel wird insbesondere verstanden, dass es eine gedachte Spiegelebene gibt, wobei die gespiegelte Position der ersten Schaberkante und des ersten Stützmittels an dieser Spiegelebene jeweils der Position der zweiten Schaberkante und des zweiten Stützmittel im Wesentlichen entspricht.

In einer weiteren Ausführungsform der erfindungsgemäßen Vorrichtung weisen die an jeweils eine der Schaberkanten angrenzenden Schaberflächen zu der Ebene, in welcher die Schaberkante und die Mittelachse des gemeinsamen Innenkreises liegen, verschiedene Winkel auf. Die Schaberfläche mit dem kleineren Winkel wird als Entschichtungsfläche und die Schaberfläche mit dem größeren Winkel als Glättungsfläche bezeichnet. Wird nun ein Rohr mit kreisförmigem Querschnitt in die Aufnahme eingeführt, so entspricht der gemeinsame Innenkreis der Außenoberfläche des Rohres. Durch die verschiedenen Winkel, welche die Schaberflächen nun zu der Rohroberfläche aufweisen, wird bei einer Drehung des Rohres gegen eine Entschichtungsfläche die Entschichtungswirkung der betreffenden Schaberkante verbessert, während bei einer Drehung des Rohres gegen eine Glättungsfläche die Glättungs- bzw. Schleifwirkung der betreffenden Schaberkante verbessert wird. Bei einer Entschichtungsfläche beträgt der Winkel bevorzugt zwischen 5° und 45°, insbesondere mehr als 10° und/oder weniger als 40°. Bei einer Glättungsfläche beträgt der Winkel bevorzugt zwischen 30° und 80°, insbesondere mehr als 45° und/oder weniger als 75°. Die Entschichtungsflächen liegen bevorzugt auf den voneinander abgewandten Seiten der Schaberkanten, während die Glättungsflächen bevorzugt auf den einander zugewandten Seiten der Schaberkanten angeordnet sind.

Der Einsatzbereich der erfindungsgemäßen Vorrichtung wird in einer weiteren bevorzugten Ausführungsform dadurch erweitert, dass der Abstand zwischen dem Schaberkopf und den Stützmitteln, vorzugsweise über eine Gewindespindel, einstellbar ist. Auf diese Weise kann die Vorrichtung an verschiedene Rohrgrößen angepasst werden, so dass Rohre mit verschieden großen Querschnitten mit derselben Vorrichtung entschichtet werden können. Über eine Gewindespindel kann der Abstand besonderes genau eingestellt werden. Weiterhin kann die Andruckkraft der Schaberkanten gegen die Rohroberfläche genau eingestellt werden. Die Andruckkraft ist insbesondere an die Oberflächenbeschichtung der zu entschichtenden Rohre angepasst.

Insbesondere ist der Abstand zwischen dem Schaberkopf und den Stützmitteln zum Erreichen der zuvor bezüglich des gemeinsamen Innenkreises genannten Vorteile so einstellbar, dass die zwei Schaberkanten und die zwei Stützmittel zu jeder Zeit auf einem gemeinsamen Innenkreis liegen. Weiterhin ist bevorzugt, dass bei im Wesentlichem jedem der einstellbaren Abstände zwischen dem Stützkopf und den Stützmitteln die an jeweils eine der Schaberkante angrenzenden Schaberflächen zu der Ebene, in welcher die Schaberkante und die Mittelachse des jeweiligen gemeinsamen Innenkreises liegen, verschiedene Winkel aufweisen. Auf diese Weise werden bei im Wesentlichen jedem der einstellbaren Abstände die oben genannten Vorteile der verschiedenen Winkel der Entschichtungsfläche und der Glättungsfläche erreicht.

In einer weiteren Ausführungsform der erfindungsgemäßen Vorrichtung sind mindestens ein Stützmittel, vorzugsweise alle Stützmittel, als Rollen ausgebildet. Auf diese Weise kann das Rohr einfach um die Vorrichtung bzw. die Vorrichtung um das Rohr gedreht werden, so dass der Kraftaufwand zur Entschichtung verringert wird.

Eine effektivere Entschichtung, insbesondere bei beengten Platzverhältnissen, wird gemäß einer weiteren Ausführungsform der erfindungsgemäßen Vorrichtung dadurch erreicht, dass mindestens ein Stützmittel als weiterer Schaberkopf ausgebildet ist. Auf diese Weise kann das Rohr bereits durch eine im Wesentlichen halbe Umdrehung bzw. durch eine entsprechende Hin- und Herbewegung über den gesamten Umfang entschichtet werden. Der Schaberkopf weist dazu insbesondere mindestens eine Schaberkante, vorzugsweise mindestens eine prismenförmige Schaberkante auf. Die beiden Stützelemente können besonders bevorzugt auch als ein einziger Schaberkopf mit zwei Schaberkanten ausgebildet sein. Eine hohe Gleichmäßigkeit der Entschichtung wird insbesondere dadurch erreicht, dass der als Stützmittel wirkende Schaberkopf und der auf der gegenüberliegenden Seite der Aufnahme angeordnete Schaberkopf gleichartig ausgebildet sind.

Eine gleichmäßigere Entschichtung kann in einer weiteren bevorzugten Ausführungsform der erfindungsgemäßen Vorrichtung dadurch erreicht werden, dass der Schaberkopf und/oder die Stützmittel federgelagert sind. Auf diese Weise bleiben auch bei einer sehr ungleichmäßigen Außenoberfläche des zu entschichtenden Rohres die Andruckkräfte der Schaberkanten im Wesentlichen gleich.

In einer weiteren Ausführungsform der erfindungsgemäßen Vorrichtung ist am Schaberkopf eine seitliche, quer zu den Schaberkanten orientierte Anschlagsfläche vorgesehen, welche den Schaberkopf auf der Seite der Schaberkanten zumindest abschnittsweise überragt. Auf diese Weise wird das Enschichten eines Rohrendes, beispielsweise zur Vorbereitung für eine Verbindung mit einem Rohr oder einem Rohrverbinder, vereinfacht, da die richtige relative axiale Position der Vorrichtung zum Rohr durch die Anlage der Kopfseite des Rohrendes an die Anschlagsfläche sichergestellt werden kann. Damit wird die Handhabung der Vorrichtung vereinfacht, da auch ohne besondere Sorgfalt der richtige Bereich des Rohrendes entschichtet wird.

Die Handhabung der Vorrichtung wird in einer weiteren Ausführungsform der erfindungsgemäßen Vorrichtung dadurch weiter vereinfacht, dass am Schaberkopf eine seitliche, quer zu den Schaberkanten orientierte Entgratungsschneide vorgesehen ist, welche den Schaberkopf auf der Seite der Schaberkanten zumindest abschnittsweise überragt. Mit der Entgratungsschneide kann die Kante an der Kopfseite eines Rohrendes während der Entschichtung gleichzeitig entgratet werden, so dass ein Arbeitsschritt eingespart werden kann.

In einer weiteren bevorzugten Ausführungsform der erfindungsgemäßen Vorrichtung weist der Schaberkopf im Bereich der Schaberkanten mindestens eine Ausnehmung auf. Durch die Ausnehmung liegt die Schaberkante in diesem Bereich nicht an der Rohroberfläche an, so dass das Rohr in diesem Bereich auch nicht entschichtet wird. Dadurch wird die zur Betätigung der Vorrichtung erforderliche Kraft reduziert. Bevorzugt ist die Ausnehmung so angeordnet, dass das Rohr lediglich im Dichtungsbereich der geplanten Verbindung mit einem weiteren Rohr bzw. einem Rohrverbinder entschichtet wird. Bei dieser Position kann es sich beispielsweise um die Lage eines O-Rings in einem Verbinder handeln. Ist an dem Schaberkopf gleichzeitig eine Anschlagsfläche vorgesehen, so wird erreicht, dass die richtige Position des entschichteten Bereichs ohne besondere erforderliche Sorgfalt eingehalten werden kann.

Die oben genannte Aufgabe wird weiterhin durch die Verwendung einer erfindungsgemäßen Vorrichtung gemäß dem Anspruch 11 zur mindestens teilweisen Entschichtung von Rohren gelöst. Es hat sich herausgestellt, dass Rohre besonders einfach und effektiv mit der erfindungsgemäßen Vorrichtung entschichtet werden können. Insbesondere kann die erfindungsgemäße Vorrichtung zur Entfernung einer Korrosionsschutzschicht, insbesondere einer Schellackschicht, von einem metallischen Rohrende vor der Verbindung des Rohrendes mit einem Rohrverbinder verwendet werden. Auf diese Weise kann ein mit einer Korrosionsschutzschicht versehenes, metallisches Rohrende besonders einfach für eine Verbindung mit einem Rohrverbinder vorbereitet werden. Die Verwendung erfolgt besonders bevorzugt zur Entschichtung dickwandiger Stahlrohre, beispielsweise mit einer Rohrwanddicke von mindestens 1 mm, vorzugsweise von mindestens 2 mm.

Weitere Vorteile und Merkmale der Erfindung sind der nachfolgenden Beschreibung mehrerer Ausführungsbeispiele zu entnehmen, wobei auf die beigefügte Zeichnung Bezug genommen wird.

In der Zeichnung zeigen
- Fig. 1: ein erstes Ausführungsbeispiel einer erfindungsgemäßen Vorrichtung in Seitenansicht,
- Fig. 2: das Ausführungsbeispiel aus Fig. 1 in einer Schnittdarstellung mit vertikaler Schnittebene,
- Fig. 3: ein Detail der Schnittdarstellung aus Fig. 2,
- Fig. 4a-b: eine schematische Ansicht des Ausführungsbeispiels aus Fig. 1 bei verschiedenen Positionen des Schaberkopfs,
- Fig. 5: eine perspektivische Schnittansicht des Ausführungsbeispiels aus Fig. 1 mit horizontaler Schnittebene,
- Fig. 6: eine perspektivische Schnittansicht des Ausführungsbeispiels aus Fig. 1 mit vertikaler Schnittebene,
- Fig. 7: einen Schaberkopf für ein zweites Ausführungsbeispiel einer erfindungsgemäßen Vorrichtung,
- Fig. 8: einen Schaberkopf für ein drittes Ausführungsbeispiel einer erfindungsgemäßen Vorrichtung und
- Fig. 9: ein viertes Ausführungsbeispiel einer erfindungsgemäßen Vorrichtung in Seitenansicht.

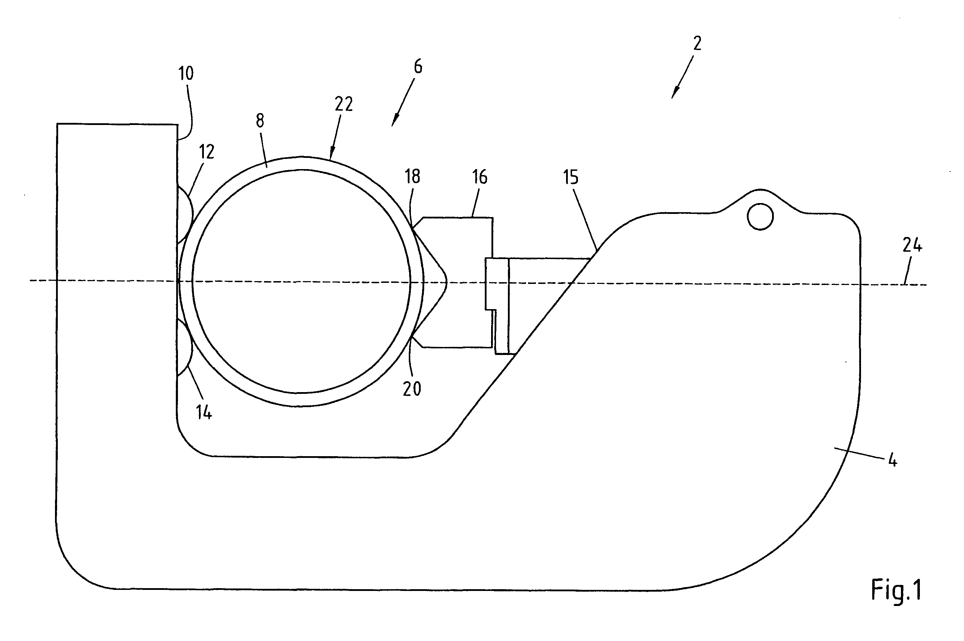

Fig. 1 zeigt ein erstes Ausführungsbeispiel einer erfindungsgemäßen Vorrichtung zur teilweisen Entschichtung von Rohren. Die Vorrichtung 2 weist einen zwingenförmigen Grundkörper 4 mit einer Aufnahme 6 für ein Rohr 8 auf. An einer ersten Seite 10 der Aufnahme 6 sind zwei Stützmittel 12, 14 angeordnet, welche in diesem Ausführungsbeispiel als Rollen ausgebildet sind. Alternativ könnten die Stützmittel 12, 14 beispielsweise auch als feststehende Zylinder oder als Schaberkopf ausgebildet sein. Auf der gegenüberliegenden Seite 15 der Aufnahme 6 ist ein Schaberkopf 16 vorgesehen, welcher eine erste 18 und eine zweite prismenförmige Schaberkante 20 aufweist. Die Schaberkanten 18 und 20 sind so angeordnet, dass sie mit den zwei Stützmitteln 12 und 14 auf einem gemeinsamen Innenkreis 22 liegen, welcher in Fig. 1 mit der Außenoberfläche des Rohres 8 übereinstimmt. Weiterhin sind die zwei Schaberkanten 18, 20 und die zwei Stützmittel 12 und 14 spiegelsymmetrisch zueinander angeordnet, wobei die Spiegelebene 24 in Fig. 1 als gestrichelte Linie eingezeichnet ist.

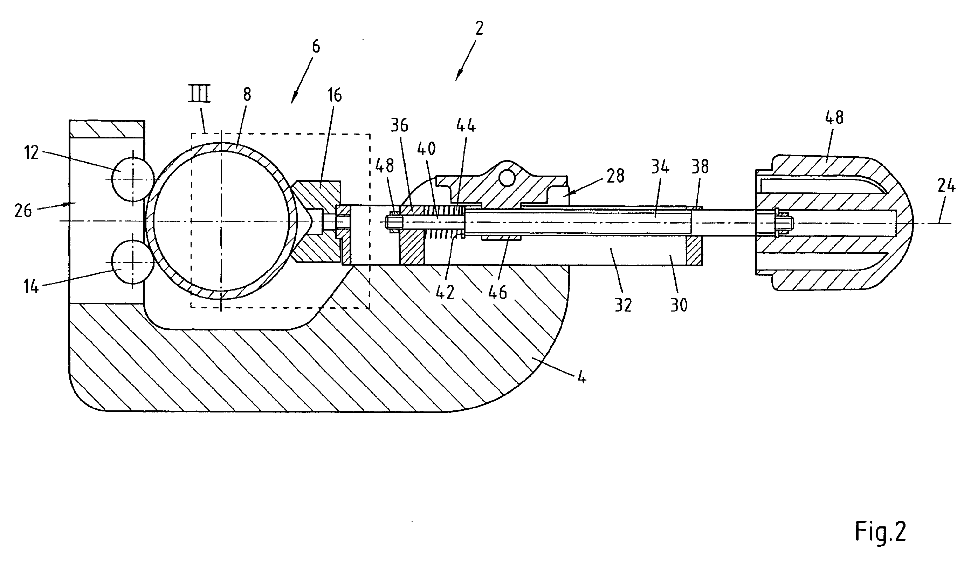

Fig. 2 zeigt eine Schnittdarstellung des ersten Ausführungsbeispiels der erfindungsgemäßen Vorrichtung aus Fig. 1. Der Grundkörper 4 weist im Bereich der Stützmittel 12, 14 eine Ausnehmung 26 auf, welche eine freie Beweglichkeit der als Rollen ausgebildeten Stützmittel 12, 14 erlaubt. Der Grundkörper 4 weist weiterhin auf der gegenüberliegenden Seite 15 eine Ausnehmung 28 auf, in welcher ein Schiebeelement 30 angeordnet ist. An dem der Ausnehmung 6 des Grundkörpers 4 zugewandten Ende des Schiebeelements 30 ist der Schaberkopf 16 montiert. Das Schiebeelement 30 weist einen Hohlraum 32 auf, in welchem eine Gewindespindel 34 längs zur Erstreckungsrichtung des Schiebeelements 30 angeordnet ist. Die Gewindespindel 34 ist durch zwei Lager 36, 38 im Schiebeelement 30 drehbar gelagert. Die Gewindespindel 34 weist abschnittsweise ein Gewinde auf. Weiterhin sind an dem der Aufnahme 6 zugewandten Ende der Gewindespindel 34 ein verjüngter Bereich 40 sowie eine Anschlagsfläche 42 beim Übergang zum verjüngten Bereich 40 vorgesehen. Zwischen dem ersten Lager 36 des Schiebeelements 30 und der Anschlagsfläche 42 der Gewindespindel 34 ist eine Feder 44 angeordnet. Die Gewindespindel 34 ist in ihrer Position relativ zum Grundkörper 4 durch ein Gegengewinde 46 am Grundkörper 4 fixiert, welches in das Gewinde der Gewindespindel 34 eingreift. Dadurch wird das Schiebeelement 30 über die Feder 44 in Richtung der Aufnahme 6 des Grundkörpers 4 gedrückt, so dass die Schaberkanten 18, 20 eine Kraft auf die Außenoberfläche des Rohres 8 ausüben. Der Schaberkopf 16 ist auf diese Weise auch federgelagert.

An dem der Aufnahme 6 des Grundkörpers 4 abgewandten Ende der Gewindespindel 34 ist ein Drehknauf 48 vorgesehen, welcher ein Drehen der Gewindespindel einfach ermöglicht. Wird nun der Drehknauf 48 im Uhrzeigersinn gedreht, so bewegt sich die Gewindespindel 34 aufgrund des Gegengewindes 46 am Grundkörper 4 auf die Aufnahme 6 des Grundkörpers 4 zu. Dadurch wird die Anschlagsfläche 42 in Richtung des Lagers 36 bewegt, so dass die Feder 44 zusammengedrückt wird und sich dadurch die Kraft der Schaberkanten 18, 20 auf das Rohr 8 erhöht. Bei Drehung des Drehknaufs 48 in entgegengesetzter Richtung wird die Gewindespindel von der Aufnahme 6 des Grundkörpers 4 wegbewegt, so dass sich die Feder 44 wieder entspannt und dadurch die Kraft des Schaberkopfs 16 auf das Rohr 8 verringert wird. Um ein Hinausrutschen der Gewindespindel aus dem Schiebelement 30 zu verhindern, sind auf der der Aufnahme 6 des Grundkörpers 4 zugewandten Seite des ersten Lagers 36 Sperrmittel in Form eines Sperrbolzens 48 an der Gewindespindel 34 vorgesehen. Anstelle eines Sperrbolzens 48 können alternativ auch andere Sperrmittel wie zum Beispiel eine fixierte, insbesondere eingeklebte Mutter, eine Wellensicherung oder Ähnliches vorgesehen sein.

Durch eine Drehung am Drehknauf 48 kann der Schaberkopf auf die Stützmittel 12, 14 zu oder von diesen wegbewegt werden, so dass mit der Vorrichtung 2 Rohre mit verschiedenen Rohrquerschnitten bearbeitet werden können. Die Bewegung des Schaberkopfs 16 erfolgt vorzugsweise so, dass die beiden Schaberkanten 18, 20 und die beiden Stützmittel 12, 14 im Wesentlichen zu jedem Zeitpunkt der gesamten Bewegung auf einem gemeinsamen Innenkreis liegen.

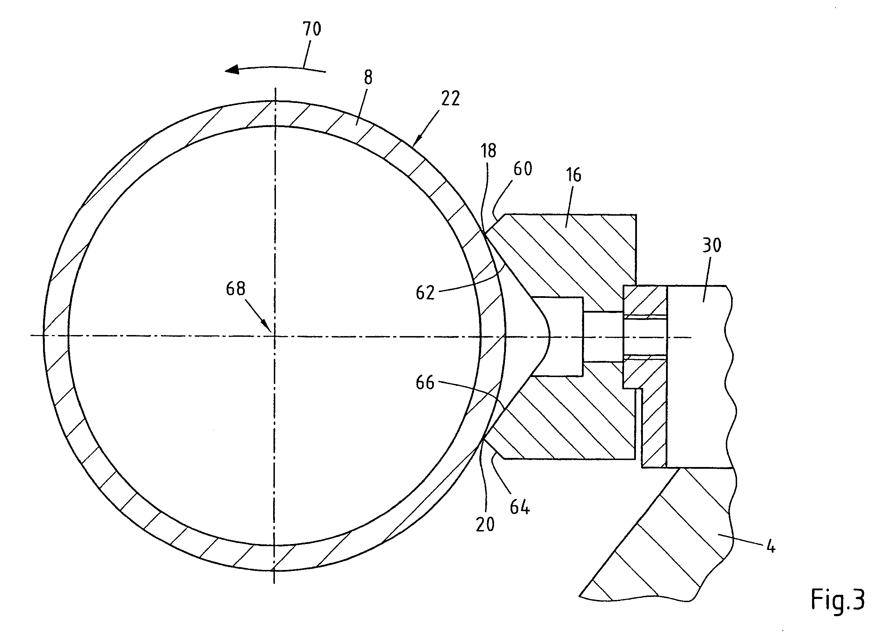

Fig. 3 zeigt den in Fig. 2 mit III gekennzeichneten Ausschnitt der Vorrichtung 2 in vergrößerter Darstellung. Die Schaberkanten 18, 20 des Schaberkopfs 16 sind prismenförmig ausgebildet. Dies bedeutet, dass der Schaberkopf 16 im Bereich der Schaberkanten 18, 20 im Wesentlichen einen dreiecksförmigen Querschnitt aufweist. Die an die Schaberkante 18 angrenzenden Schaberflächen 60, 62 bzw. die an die Schaberkante 20 angrenzenden Schaberflächen 64, 66 schließen an den Schaberkanten 18, 20 jeweils einen Winkel zwischen 60° und 120°, vorzugsweise zwischen 80° und 110° ein. Die Breite der Schaberflächen 60, 62, 64, 66 beträgt bevorzugt mindestens 0,5 cm, besonders bevorzugt mindestens 1 cm. Die Schaberflächen 62 und 66 weisen zu der Ebene, in welcher die jeweilige Schaberkante 18 bzw. 20 und die Mittelachse 68 des gemeinsamen Innenkreises liegen, einen größeren Winkel auf als die Schaberflächen 60 und 64. Daher werden die Schaberflächen 60 und 62 als Glättungsflächen und die Schaberflächen 62 und 66 als Entschichtungsflächen bezeichnet.

Bei einer Drehung des Rohres 8 in Richtung des Pfeils 70 wird die Oberflächenbeschichtung des Rohres 8 an der Schaberkante 20 zumindest teilweise entfernt und die teilentschichtete Oberfläche des Rohres 8 an der Schaberkante 18 geschliffen bzw. geglättet. Die Drehung des Rohres 8 erfolgt dann gegen die Entschichtungsfläche 64 und gegen die Glättungsfläche 62. Bei einer Bewegung des Rohres entgegen der Pfeilrichtung 70 findet die Entschichtung an der Schaberkante 18 und die Glättung bzw. das Schleifen an der Schaberkante 20 statt. Die Entschichtung wird durch die kleineren Winkel der als Entschichtungsflächen ausgebildeten Schaberflächen 60, 64 begünstigt, während das Schleifen bzw. Glätten durch die größeren Winkel der als Glättungsflächen ausgebildeten Schaberflächen 62, 66 begünstigt wird.

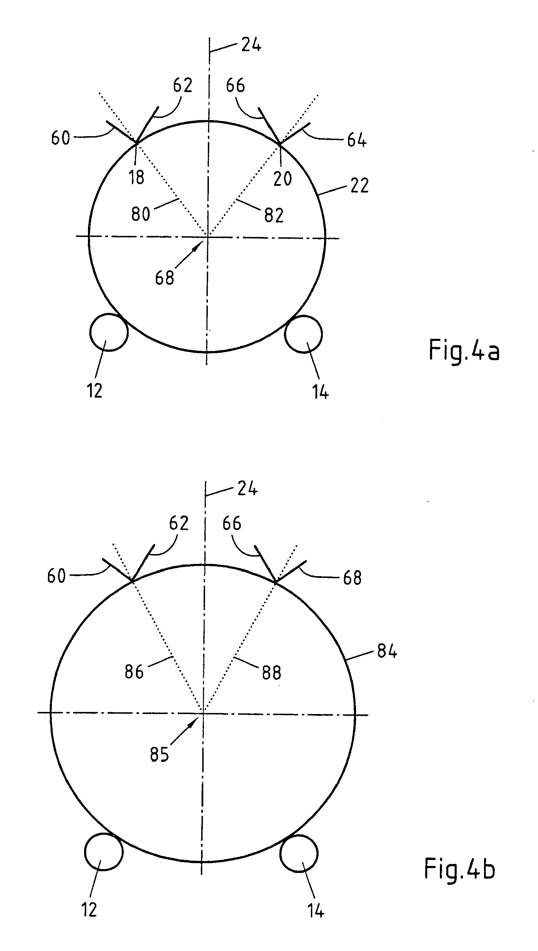

In den Fig. 4a und 4b sind schematisch die Winkel der Schaberflächen 60, 62, 64, 66 bei verschiedenen Rohrdurchmessern bzw. verschiedenen Innenkreisen dargestellt. In Fig. 4a ist die Ebene 80, in welcher die Schaberkante 18 und die Mittelachse 68 des gemeinsamen Innenkreises 22 liegt, punktiert dargestellt. Weiterhin ist auch die Ebene 82, in welcher die Schaberkante 20 und die Mittelachse 68 liegen, als punktierte Linie dargestellt. Die Mittelachse 68 verläuft in Fig. 4a senkrecht zur Betrachtungsebene. Die äußeren Schaberflächen 60 und 64, welche an die Schaberkanten 18 bzw. 20 angrenzen, schneiden die Ebenen 80 bzw. 82 in einem kleineren Winkel als die nach innen weisenden Schaberflächen 62 und 66.

In Fig. 4b ist der Abstand zwischen dem Schaberkopf (nicht gezeigt) und den Stützmitteln 12, 14 größer als in Fig. 4a, so dass der gemeinsame Innenkreis 84 und damit die zu dieser Einstellung der Vorrichtung passende Rohrgröße ebenfalls vergrößert sind. Die Mittelachse 85 des Innenkreises 84 verläuft senkrecht zur Betrachtungsebene. Die den Ebenen 80 und 82 aus Fig. 4a entsprechenden Ebenen 86 und 88 schließen mit der Spiegelsymmetrieebene 24 nun einen kleineren Winkel ein. Gleichwohl weisen die äußeren Schaberflächen 60 und 64 weiterhin einen geringeren Winkel zu den Ebenen 86 bzw. 88 auf als die Schaberflächen 62 und 66. Somit kann für einen Bereich verschiedener Rohrgrößen sichergestellt werden, dass die Schaberflächen 60 und 64 als Entschichtungsflächen und die Schaberflächen 62 und 66 als Glättungsflächen wirken.

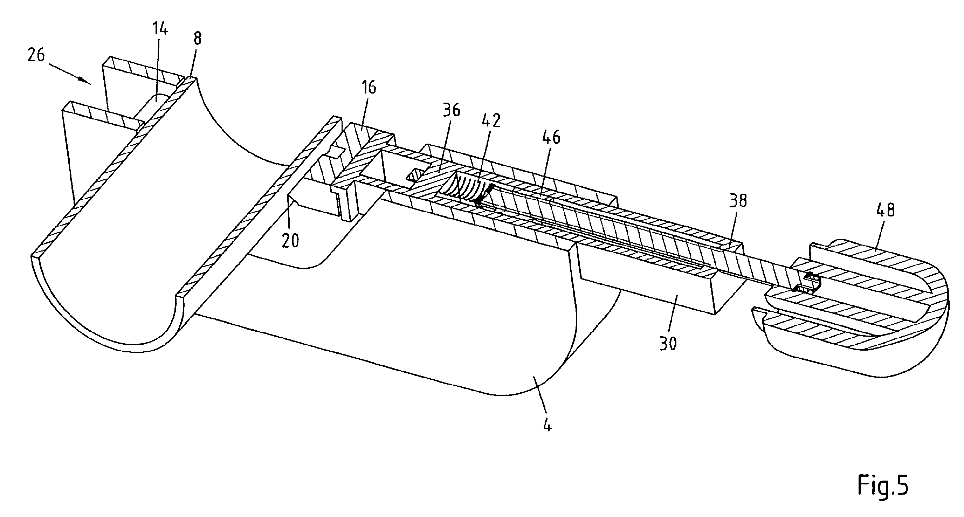

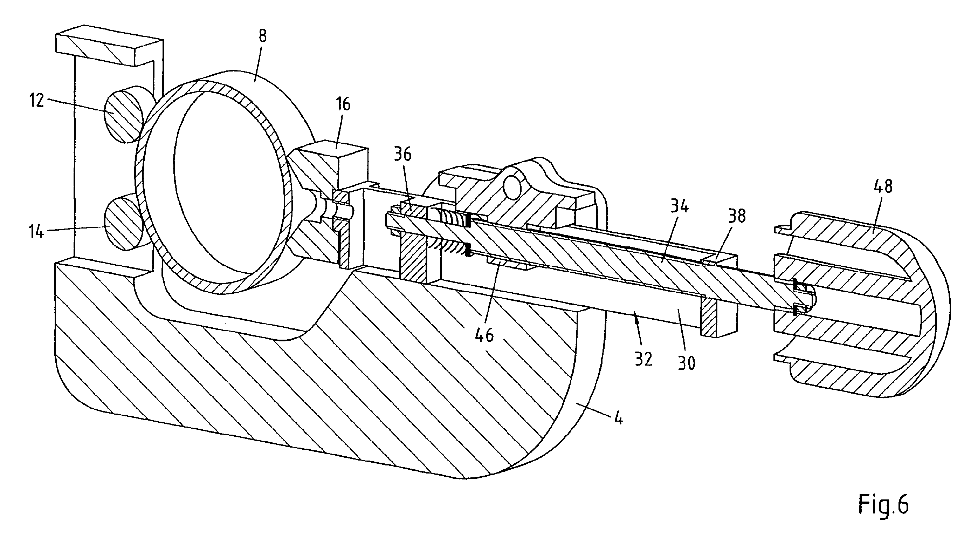

Die Fig. 5 und 6 zeigen zwei perspektivische Schnittansichten des Ausführungsbeispiels der erfindungsgemäßen Vorrichtung aus Fig. 1, und zwar mit einer horizontalen Schnittebene in Fig. 5 und einer vertikalen Schnittebene in Fig. 6.

Um nun ein Rohr mit einer erfindungsgemäßen Vorrichtung, beispielsweise mit dem in Fig. 1 gezeigten Ausführungsbeispiel der Vorrichtung, zu entschichten, wird die Vorrichtung 2 zunächst auf das zu entschichtende Rohr 8 aufgeschoben. Dann wird der Schaberkopf 16 durch Drehung am Drehknauf 48 so lange in Richtung der Stützelemente 12, 14 bewegt, bis die Schaberkanten 18, 20 von der Feder 44 mit der gewünschten Kraft an die Außenoberfläche des Rohres gedrückt werden. Die Feder 44 ist zu diesem Zeitpunkt gespannt. Nun wird die Vorrichtung 2 um das Rohr 8 oder alternativ das Rohr 8 in der Vorrichtung 2 gedreht. Die Andruckkraft der Schaberkanten 18, 20 ist bevorzugt so eingeregelt, dass die Beschichtung, beispielsweise die Schellackschicht, nach drei bis fünf Umdrehungen ausreichend vom Rohr 8 entfernt ist.

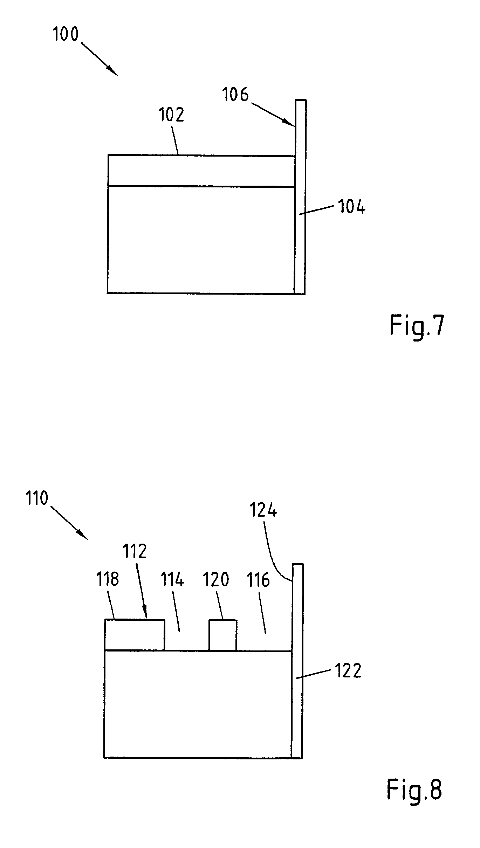

Fig. 7 zeigt einen Schaberkopf 100 für ein zweites Ausführungsbeispiel einer erfindungsgemäßen Vorrichtung in Draufsicht. Der Schaberkopf 100 weist eine erste prismenförmige Schaberkante 102 und eine zweite prismenförmige Schaberkante, welche in dieser Darstellung von der ersten Schaberkante 102 verdeckt wird. Der Schaberkopf 100 weist weiterhin eine seitliche Platte 104 auf, welche eine quer zu den Schaberkanten orientierte Anschlagsfläche 106 zur Verfügung stellt. Diese Anschlagsfläche 106 überragt den Schaberkopf 100 auf der Seite der Schaberkanten. Ein zu entschichtendes Rohr kann nun in die Ausnehmung der entsprechenden Vorrichtung eingeführt werden, bis die Kopfseite des Rohres an der Anschlagsfläche 106 anliegt. Auf diese Weise wird durch die Anschlagsfläche 106 die axiale Lage des Schaberkopfs 100 zu dem zu bearbeiteten Rohr vorgegeben. Die Platte 104 kann alternativ oder zusätzlich auch als Entgratungsschneide (nicht gezeigt) ausgebildet sein, so dass ein Rohrende bei der Entschichtung gleichzeitig an der Kopfseite entgratet wird.

Fig. 8 zeigt einen Schaberkopf 110 für ein drittes Ausführungsbeispiel einer erfindungsgemäßen Vorrichtung. Der Schaberkopf 110 unterscheidet sich von dem in Fig. 7 gezeigten Schaberkopf 100 dadurch, dass die Schaberkante 112 Ausnehmungen 114, 116 aufweist, so dass die Schaberkante 112 in zwei voneinander getrennten Bereichen 118, 120 hervorragt. Auf diese Weise wird ein in die entsprechende Vorrichtung eingeführtes Rohr nur in diesen Bereichen entschichtet. Dadurch ist die effektive Länge der Schaberkante 112 reduziert, so dass die Entschichtung mit einer geringeren Kraft durchführbar ist. Durch die an der Seite vorgesehene Platte 122 und die dadurch zur Verfügung gestellte Anschlagsfläche 124 wird gewährleistet, dass die richtigen Bereiche des Rohrendes durch die Bereiche 118 und 120 der Schaberkante 112 entschichtet werden. Natürlich ist die Erfindung nicht auf zwei Ausnehmungen beschränkt, es ist vielmehr auch möglich nur eine Ausnehmung vorzusehen bzw. eine Mehrzahl von Ausnehmungen vorzusehen. Insbesondere können die Ausnehmungen an die Dichtungsbereiche des mit dem Rohrende zu verbindenden Rohrverbinders angepasst werden. So ist ein Bereich der Schaberkante bevorzugt an der späteren axialen Lage des Dichtungselements der Verbindung angeordnet.

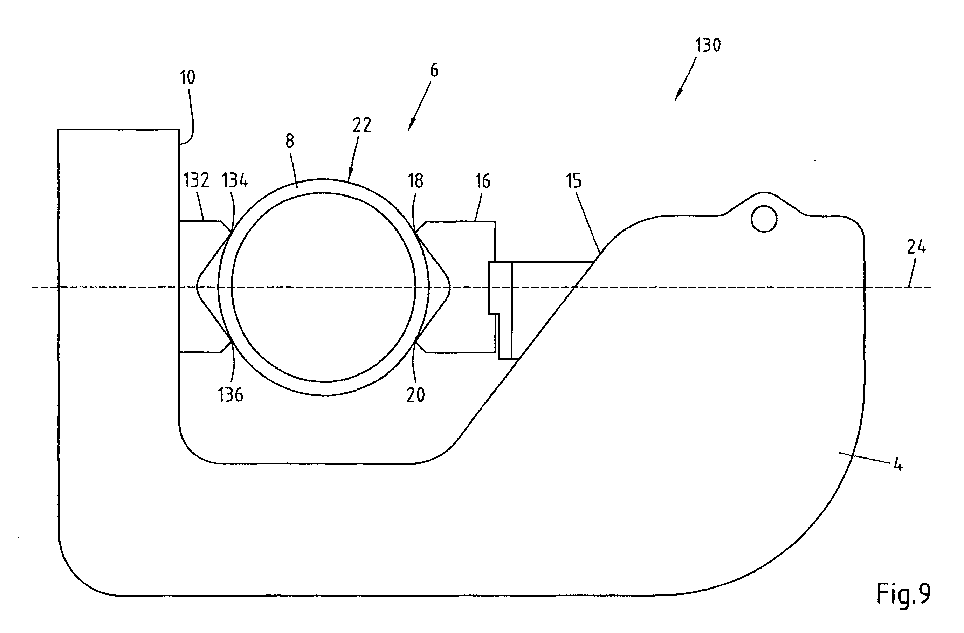

Fig. 9 zeigt ein viertes Ausführungsbeispiel einer erfindungsgemäßen Vorrichtung. Die Vorrichtung 130 unterscheidet sich dadurch von der in Fig. 1 gezeigten Vorrichtung 2, dass die Stützelemente als weiterer Schaberkopf 132 mit zwei Schaberkanten 134, 136 ausgebildet sind. Die einander entsprechenden Komponenten der Vorrichtungen 2 und 130 sind mit denselben Bezugszeichen versehen. Durch die Schaberkanten 134, 136 wird das in der Vorrichtung 2 angeordnete Rohr 8 einerseits abgestützt und andererseits bei einer Drehung der Vorrichtung 130 um das Rohr 8 entschichtet. Auf diese Weise kann das Rohr bereits durch eine halben Drehung bzw. durch eine entsprechende Hin-und Herbewegung der Vorrichtung 130 auf dem gesamten Umfang entschichtet werden. Dies ist insbesondere von Vorteil, wenn die Platzverhältnisse eine vollständige Drehung der Vorrichtung 130 nicht erlauben. Die Schaberköpfe 16 und 132 sind in Fig. 9 gleichartig ausgebildet. Es ist jedoch auch möglich, eine unterschiedliche Ausgestaltung der Schaberköpfe 16 und 132 vorzusehen. Alternativ können die zwei Stützelemente beispielsweise auch als zwei einzelne Schaberköpfe mit jeweils einer Schaberkante ausgebildet sein.

## Patentansprüche

1. Vorrichtung zur teilweisen Entschichtung von Rohren, insbesondere von Rohren aus Metall,
- mit einem Grundkörper (4),
- mit einer am Grundkörper (4) ausgebildeten Aufnahme (6) für ein Rohr (8),
- mit mindestens zwei an einer ersten Seite (10) der Aufnahme (6) angeordneten Stützmitteln (12, 14) zur Stützung des Rohres (8),
- mit einem auf der gegenüberliegenden Seite (15) der Aufnahme (6) angeordneten Schaberkopf (16, 100, 110), **dadurch gekennzeichnet,**
- **dass** der Schaberkopf (16, 100, 110) zwei prismenförmige und im Querschnitt jeweils im Wesentlichen eine Dreiecksform aufweisende Schaberkanten (18, 20, 102, 112) aufweist und
- **dass** die zwei Schaberkanten (18, 20, 102, 112) so angeordnet sind, dass diese mit den zwei Stützmitteln (12, 14) auf einem gemeinsamen Innenkreis (22, 84) liegen.

2. Vorrichtung nach Anspruch 1,
**dadurch gekennzeichnet,**
**dass** die Schaberkanten (18, 20, 102, 112) und die mindestens zwei Stützmittel (12, 14) im Wesentlichen spiegelsymmetrisch zueinander angeordnet sind.

3. Vorrichtung nach Anspruch 1 oder 2,
**dadurch gekennzeichnet,**
**dass** die an jeweils eine der Schaberkanten (18, 20, 102, 112) angrenzenden Schaberflächen (60, 62, 64, 66) zu der Ebene, in welcher die Schaberkante (18, 20, 102, 112) und die Mittelachse (68, 85) des gemeinsamen Innenkreises (22, 84) liegen, verschiedene Winkel aufweisen.

4. Vorrichtung nach einem der Ansprüche 1 bis 3,
**dadurch gekennzeichnet,**
**dass** der Abstand zwischen dem Schaberkopf (16, 100, 110) und den Stützmitteln (12, 14), vorzugsweise über eine Gewindespindel (34), einstellbar ist.

5. Vorrichtung nach einem der Ansprüche 1 bis 4,
**dadurch gekennzeichnet,**
**dass** mindestens ein Stützmittel, insbesondere alle Stützmittel (12, 14), als Rollen ausgebildet sind.

6. Vorrichtung nach einem der Ansprüche 1 bis 5,
**dadurch gekennzeichnet,**
**dass** mindestens ein Stützmittel (12, 14) als weiterer Schaberkopf (132) ausgebildet ist.

7. Vorrichtung nach einem der Ansprüche 1 bis 6,
**dadurch gekennzeichnet,**
**dass** der Schaberkopf (16, 100, 110) und/oder die Stützmittel (12, 14) federgelagert sind.

8. Vorrichtung nach einem der Ansprüche 1 bis 7,
**dadurch gekennzeichnet,**
**dass** am Schaberkopf (16, 100, 110) eine seitliche, quer zu den Schaberkanten (18, 20, 102, 112) orientierte Anschlagsfläche (106, 124) vorgesehen ist, welche den Schaberkopf (16, 100, 110) auf der Seite der Schaberkanten (18, 20, 102, 112) zumindest abschnittsweise überragt.

9. Vorrichtung nach einem der Ansprüche 1 bis 8,
**dadurch gekennzeichnet,**
**dass** am Schaberkopf (16, 100, 110) eine seitliche, quer zu den Schaberkanten (18, 20, 102, 112) orientierte Entgratungsschneide vorgesehen ist, welche den Schaberkopf auf der Seite der Schaberkanten (18, 20, 102, 112) zumindest abschnittsweise überragt.

10. Vorrichtung nach einem der Ansprüche 1 bis 9,
**dadurch gekennzeichnet,**
**dass** der Schaberkopf (16, 100, 110) im Bereich der Schaberkanten (18, 20, 102, 112) mindestens eine Ausnehmung (114, 116) aufweist.

11. Verwendung einer Vorrichtung nach einem der Ansprüche 1 bis 10 zur mindestens teilweisen Entschichtung von Rohren.

## Claims

1. Device for the partial removal of coating from pipes, in particular from metal pipes,
- having a base body (4),
- having an accommodation area (6), formed on the base body (4), for a pipe (8),
- having at least two supporting means (12, 14), arranged on a first side (10) of the accommodation area (6), for supporting the pipe (8),
- having a scraper head (16, 100, 110) arranged on the opposite side (15) of the accommodation area (6), **characterised in that**
- the scraper head (16, 100, 110) has two prismatic scraper edges (18, 20, 102, 112) being essentially triangle-shaped in the area of the scraper edge in cross-section and
- the two scraper edges (18, 20, 102, 112) are arranged in such a way that they lie on a common inner circle (22, 84) with the two supporting means (12, 14).

2. Device according to Claim 1, **characterised in that** the two scraper edges (18, 20, 102, 112) and the at least two supporting means (12, 14) are arranged essentially mirror-symmetrically in relation to one another.

3. Device according to Claim 1 or 2, **characterised in that** the scraper areas (60, 62, 64, 66), in each case adjacent to one of the scraper edges (18, 20, 102, 112), have different angles to the plane in which the scraper edge (18, 20, 102, 112) and the centre axis (68, 85) of the common inner circle (22, 84) lie.

4. Device according to any one of Claims 1 to 3, **characterised in that** the distance between the scraper head (16, 100, 110) and the supporting means (12, 14) can be adjusted, preferably via a threaded spindle (34).

5. Device according to any one of Claims 1 to 4, **characterised in that** at least one supporting means, in particular all supporting means (12, 14), are designed as rollers.

6. Device according to any one of Claims 1 to 5, **characterised in that** at least one supporting means (12, 14) is designed as another scraper head (132).

7. Device according to any one of Claims 1 to 6, **characterised in that** the scraper head (16, 100, 110) and/or the supporting means (12, 14) are spring-loaded.

8. Device according to any one of Claims 1 to 7, **characterised in that** a lateral stop face (106, 124), aligned transverse to the scraper edges (18, 20, 102, 112), is provided on the scraper head (16, 100, 110), which lateral stop face (106, 124) juts out from the scraper head (16, 100, 110) on the side of the scraper edges (18, 20, 102, 112) at least in sections.

9. Device according to any one of Claims 1 to 8, **characterised in that** a lateral deburring blade, aligned transverse to the scraper edges (18, 20, 102, 112), is provided on the scraper head (16, 100, 110), which lateral deburring blade juts out from the scraper head on the side of the scraper edges (18, 20, 102, 112) at least in sections.

10. Device according to any one of Claims 1 to 9, **characterised in that** the scraper head (16, 100, 110) has at least one recess (114, 116) in the area of the scraper edges (18, 20, 102, 112).

11. Use of a device according to any one of Claims 1 to 10 for the at least partial removal of coating from pipes.

## Revendications

1. Dispositif de décapage partiel de tuyaux, en particulier de tuyaux en métal,
- avec un corps de base (4),
- avec un réceptacle (6) formé sur le corps de base (4) pour recevoir un tuyau (8),
- avec au moins deux moyens de support (12, 14) disposés sur un premier côté (10) du réceptacle (6) pour soutenir le tuyau (8),
- avec une tête de raclage (16, 100, 110) disposée sur le côté opposé (15) du réceptacle (6),
**caractérisé en ce que**
- la tête de raclage (16, 100, 110) est dotée de deux bords de raclage (18, 20, 102, 112) en forme de prismes et présentant chacun une section transversale sensiblement triangulaire, et que
- les deux bords de raclage (18, 20, 102, 112) sont disposés de sorte qu'ils se trouvent situés avec les deux moyens de support (12, 14) sur un cercle intérieur (22, 84) commun.

2. Dispositif selon la revendication 1, **caractérisé en ce que** les bords de raclage (18, 20, 102, 112) et les deux moyens de support (12, 14) au moins prévus sont disposés sensiblement en symétrie spéculaire les uns par rapport aux autres.

3. Dispositif selon revendication 1 ou 2, **caractérisé en ce que** les surfaces de raclage (60, 62, 64, 66), contigües aux bords de raclage (18, 20, 102, 102, 112), présentent différents angles par rapport au plan, sur lequel sont situés le bord de raclage (18, 20, 102, 102, 112) et l'axe central (68, 85) du cercle central, commun (22, 84).

4. Dispositif selon l'une des revendications 1 à 3, **caractérisé en ce que** la distance entre les têtes de raclage (16, 100, 110) et les moyens de support (12, 14) est de préférence réglable par l'intermédiaire d'une broche filetée (34).

5. Dispositif selon l'une des revendications 1 à 4, **caractérisé en ce qu'**au moins un moyen de support, en particulier tous les moyens de support (12, 14), sont réalisés sous la forme de rouleaux.

6. Dispositif selon l'une des revendications 1 à 5, **caractérisé en ce qu'**au moins un moyen de support (12, 14) est réalisé sous la forme d'une autre tête de raclage (132).

7. Dispositif selon l'une des revendications 1 à 6, **caractérisé en ce que** la tête de raclage (16, 100, 110) et / ou les moyens de support (12, 14) sont montés à ressort.

8. Dispositif selon l'une des revendications 1 à 7, **caractérisé en ce que**, sur la tête de raclage (16, 100, 110), est prévue surface de butée (106, 124), qui, orientée perpendiculairement aux bords de raclage (18, 20, 102, 102, 112), fait saillie, au moins par sections, au-delà de la tête de raclage (16, 100, 110), sur le côté desdits bords de raclage (18, 20, 102, 102, 112).

9. Dispositif selon l'une des revendications 1 à 8, **caractérisé en ce que**, sur la tête de raclage (16, 100, 110), est prévue une lame d'ébarbage latérale, qui, orientée perpendiculairement aux bords de raclage (18, 20, 102, 102, 112), fait saillie au-delà de la tête de raclage, au moins par sections, sur le côté des bords de raclage (18, 20, 102, 102, 112).

10. Dispositif selon l'une des revendications 1 à 9, **caractérisé en ce que** la tête de raclage (16, 100, 110) est dotée d'au moins un évidement (114, 116), dans la région des bords de raclage (18, 20, 102, 102, 112).

11. Utilisation d'un dispositif selon l'une des revendications 1 à 10 pour le décapage au moins partiel de tuyaux.
